Europäisches Patentamt

European Patent Office

Office européen des brevets

(19)

(11) Veröffentlichungsnummer : **0 166 800 B1**

(12) **EUROPÄISCHE PATENTSCHRIFT**

(45) Veröffentlichungstag der Patentschrift :
05.04.89

(21) Anmeldenummer : 84107767.0

(22) Anmeldetag : 04.07.84

(51) Int. Cl.⁴ : **B 64 F 1/28**, B 67 D 5/01,
F 16 L 27/08

(54) **Kopfstück für Betankungssysteme.**

(43) Veröffentlichungstag der Anmeldung :
08.01.86 Patentblatt 86/02

(45) Bekanntmachung des Hinweises auf die Patenterteilung : 05.04.89 Patentblatt 89/14

(84) Benannte Vertragsstaaten :
BE DE FR GB IT NL

(56) Entgegenhaltungen :
DE--A-- 2 452 177
FR--A-- 2 072 405
FR--A-- 2 234 221
FR--A-- 2 241 487
GB--A-- 1 587 114
US--A-- 2 803 269
US--A-- 2 953 161

(73) Patentinhaber : **von Meyerinck, Wolfgang, Dipl.-Ing.**
**Daubringer Strasse 43**
**D-6304 Lollar (DE)**

**von Meyerinck, Dietz**
**Arnsburger Strasse 14**
**D-6302 Lich 2 (DE)**

(72) Erfinder : **von Meyerinck, Wolfgang, Dipl.-Ing.**
**Daubringer Strasse 43**
**D-6304 Lollar (DE)**
Erfinder : **von Meyerinck, Dietz**
**Arnsburger Strasse 14**
**D-6302 Lich 2 (DE)**

(74) Vertreter : **Patentanwälte Dipl.-Ing. R. Schlee Dipl.-**
**Ing. A. Missling**
**Bismarckstrasse 43**
**D-6300 Giessen (DE)**

EP 0 166 800 B1

## Beschreibung

Die Erfindung betrifft ein Kopfstück für bewegliche oder ortsfeste Betankungssysteme, insbesondere für die Flugzeugdruckbetankung, mit einer Betankungskupplung für den Anschluß an den zu füllenden bzw. zu entleerenden Tank.

Bei der Betankung von Fahrzeugen und insbesondere von Flugzeugen, vor allem dann, wenn sie im militärischen Bereich eingesetzt sind, müssen große Treibstoffmengen in kürzester Zeit von einem Hydrantensystem oder einem Tankwagen in den zu befüllenden Tank umgeschlagen werden. Problematisch bei der Betankung sind insbesondere die letzten zwanzig bis dreißig Meter, die vom Betankungswagen bzw. Hydrantensystem bis zum zu füllenden Tank zu überwinden sind. Bekannt ist es hier, Schläuche zu verwenden, die an ihrem vorderen Ende mit einer Betankungskupplung versehen sind, so daß der Betankungsvorgang unmittelbar nach dem Ankuppeln an die Füllöffnung erfolgen kann. Es werden hier Schläuche mit einer Stahl- oder Perloneinlage verwendet, die in der Regel mit Nennweiten von 6,35 cm (2 1/2") bis maximal 76,2 cm (3") versehen sind. Insbesondere bei Längen von über 20 m sind nur Schläuche mit kleineren Durchmessern infolge des hohen Gewichtes einzusetzen, da diese dann kaum noch zu handhaben sind, da der Schlauch gezogen bzw. getragen werden muß. Ein Transport der Schläuche im abgerollten Zustand, z. B. zu mehreren Anschlüssen bei einem Hydrantensystem, ist wegen der hohen Reibung auf dem Boden kaum möglich. In jedem Fall wird hierdurch die Haltbarkeit des Schlauches wesentlich herabgesetzt. Was die Haltbarkeit des Materials betrifft, so tritt hier zum einen eine Alterung des Materials ein und zum anderen eine Beschädigung durch Einschneiden der Stahleinlage, z. B. beim Überfahren der Schläuche durch die Tankwagen. Diese Schäden, insbesondere wenn es sich um innere Schäden handelt, sind nur sehr schlecht zu erkennen, so daß ein Schlauch aus Sicherheitsgründen periodisch nach einer gewissen Einsatzdauer ausgewechselt werden muß.

Ein weiterer entscheidender Nachteil bei der Verwendung eines Schlauches besteht darin, daß dieser für die Enttankung nur bedingt und nur in einer Sonderausfertigung, was höhere Kosten mit sich bringt, einsetzbar ist. Weiter ist ein Entleeren des Schlauches nur durch Anheben desselben möglich, was gleichfalls einen erheblichen Nachteil mit sich bringt. Insbesondere hat sich jedoch als nachteilig herausgestellt, daß das Ankuppeln des Schlauches an die Flugzeugkupplung infolge des hohen Gewichtes und der Spannung des Schlauches schwierig ist und daß durch den Schlauch und dessen Gewicht eine hohe Belastung der Flugzeugkupplung erfolgt und zu Schäden führen kann. Des weiteren sind auch Druckentlastungen bei Schläuchen nur sehr schwer zu realisieren. Druckentlastung ist notwendig, da der hohe Ausdehnungskoeffizient von Flugzeugbenzin eine große Volumenzunahme bei thermischer Einwirkung (Temperaturanstieg) verursacht. Der dadurch bedingte Druckanstieg streckt die Schläuche, so daß sie nicht mehr gebeugt werden können. Im umgekehrten Fall — fallende Temperaturen — entsteht Unterdruck im Schlauch, wobei sie einfallen und die Bewehrung der Schläuche bricht.

Die vorstehend aufgezeigten Nachteile bei der Verwendung von Schläuchen für die Betankung zeigt, daß abgesehen von den Handhabungsschwierigkeiten und von dem zu erwartenden hohen Verschleiß die Betankungsdauer durch Vergrößerung des Nenndurchmessers des Schlauches kaum noch zu vergrößern ist, wenn man den durch die Vergrößerung der Nennweite entstehenden Nachteil in der Handhabung berücksichtigt. Schläuche stellen wegen dieser Anfälligkeiten und der Hitzeempfindlichkeiten ein hohes Sicherheitsrisiko dar, insbesondere bei Verwendung in Nähe heißer Turbinen und Motoren bzw. in der Nähe von laufenden Turbinen, wie dies bei der Schnellbetankung von Jagdflugzeugen der Fall ist. Die beschriebenen Nachteile bedingen gleichzeitig eine intensive Wartungs- und Überprüfungstätigkeit, die vor und nach jedem Betankungsvorgang zu erfolgen hat.

Aus der GB-A-1 587 114 ist ein Betankungssystem für die drucklose Betankung von Behältern, wie z. B. Fahrzeugen bekannt, das aus vier Rohrstücken besteht, die jeweils durch Drehgelenke mit einem Freiheitsgrad miteinander verbunden sind. Das Ende des Rohrabschnittes wird in die Öffnung eines Tanks, z. B. in die Öffnung eines Tankfahrzeuges eingetaucht, wobei beim Betankungsvorgang ein Spiel zwischen dem Rohrstück und der Betankungsöffnung gegeben sein muß, damit ein Einfedern z. B. eines Tankwagens ausgeglichen werden kann. Des weiteren ist diese bekannte Betankungseinrichtung mit einem Arm versehen, der ein Absenken der Rohreinrichtungen auf ein bestimmtes Maß begrenzt, andererseits jedoch ein Hochschwenken der Rohreinrichtung zuläßt.

Der Erfindung liegt die Aufgabe zugrunde, ein Kopfstück für Betankungsanlagen der eingangs genannten Art vorzuschlagen, das unmittelbar an Tankwagen, Betankungsarme oder aber an ein Hydrantensystem anschließbar ist, das ohne weiteres und ohne Handhabungsschwierigkeiten auch mit Nennweiten von 10.16 cm (4") und größer ausgeführt werden kann, das praktisch keinem Verschleiß unterworfen ist, in einfacher Weise zu bedienen ist und praktisch momentenfrei an die Flugzeugkupplung oder anderweitige Anschlußkupplungen anschließbar ist, das einen geringen Wartungsaufwand erfordert, sowohl für die Be- als auch für die Enttankung geeignet ist, auf einem geringen Raum abstellbar ist und in der Nähe laufender Turbinen und Motoren ohne Sicherheitsrisiko einsetzbar ist.

Diese Aufgabe wird mit den Merkmalen des kennzeichnenden Teils des Anspruches 1 gelöst.

Ein Kopfstück für ein erfindungsgemäßes Betankungssystem besteht somit aus fünf Rohrabschnitten, die durch vier Drehgelenke mit jeweils einem Freiheitsgrad miteinander verbunden sind, so daß die an einem Ende des Kopfstücks befindliche Kupplung jede beliebige Stellung im Raum einnehmen kann. Hierzu sind diese vier Drehgelenke sowie das erste Drehgelenk derart angeordnet, daß drei Drehachsen parallel zueinander liegen, während die übrigen beiden Drehachsen senkrecht hierzu liegen. Durch diese Anordnung der fünf Drehgelenke ist es möglich, die Tankkupplung allseits im Raum derart zu schwenken, daß deren Kupplungsfläche immer parallel z. B. zu einer Flugzeugbetankungskupplung ausrichtbar ist, so daß ein Anschluß an letztere ohne Momentenübertragung möglich ist. Um die Handhabung des Kopfstückes zu erleichtern, ist das erste Rohrstück, das über das erste Drehgelenk mit dem Betankungssystem verbindbar ist und vorteilhaft mit seiner Drehachse lotrecht liegend angeordnet ist, mit dem zweiten Rohrstück über eine Balanceeinrichtung verbunden, die ein einstellbares Federpaket aufweist, das das Gewicht der an das erste Rohrstück angeschlossenen Rohrstücke sowie Drehgelenke auffängt, so daß die Tankkupplung an jeder Stelle des Raumes ohne oder ohne nennenswerte Kräfte gehalten werden kann. Hierdurch ist sichergestellt, daß auch bei großen Nennweiten und bei unter Druck stehender Rohrleitung ein müheloses Hantieren und Anschließen des Kopfstückes möglich ist.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen :

Fig. 1 eine Seitenansicht eines erfindungsgemäß ausgebildeten Kopfstückes eines Betankungssystems,

Fig. 2 eine Draufsicht auf das in Fig. 1 gezeigte Ausführungsbeispiel und

Fig. 3 eine Ansicht des in Fig. 1 gezeigten Ausführungsbeispiels in Richtung X.

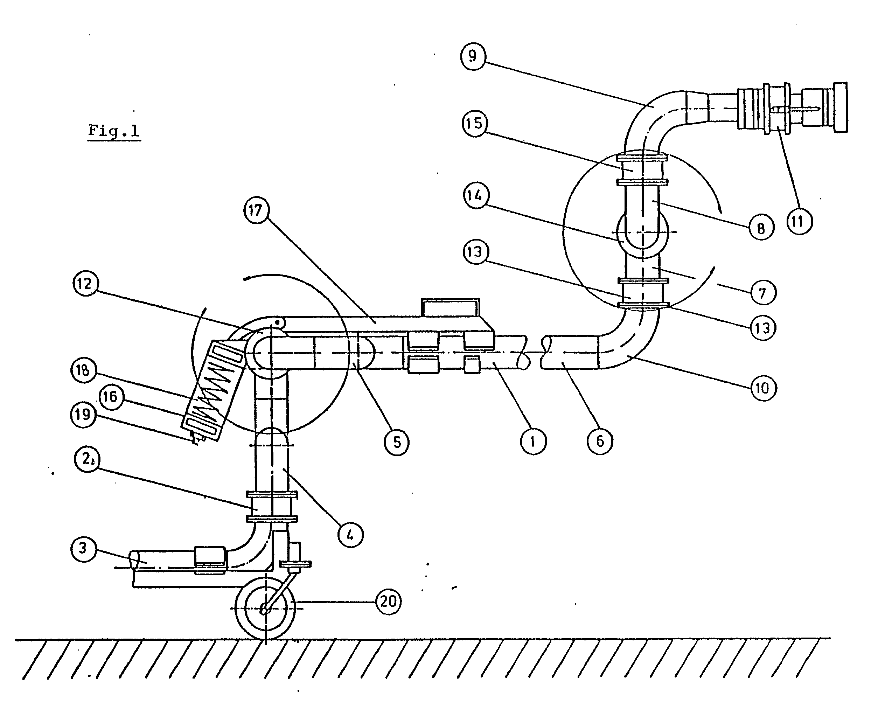

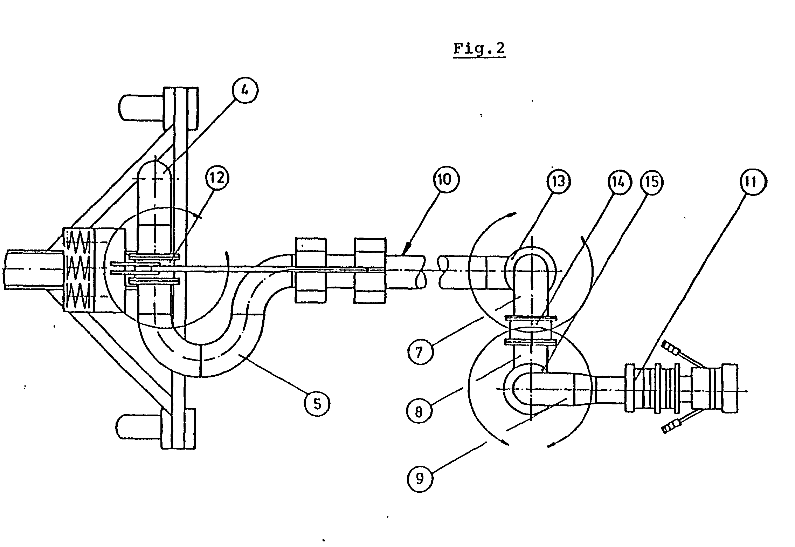

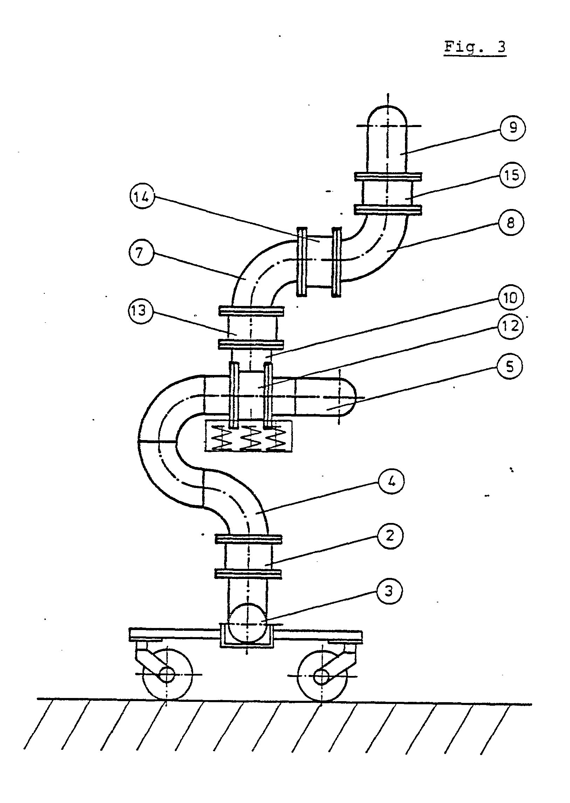

Das in den Fig. 1 bis 3 gezeigte Kopfstück 1, das über ein erstes Drehgelenk 2 an ein Betankungssystem 3 anschließbar ist, weist eine aus fünf Rohrstücken 4, 5, 7-9 bestehende Rohrleitung 10 auf, dessen Ende mit einer Betankungskupplung 11 versehen ist. Das erste Rohrstück 4 ist an seinen beiden Enden mit je einem Drehgelenk 2, 12 versehen. Das erste Drehgelenk 2 weist eine lotrecht liegende Drehachse auf, während das zweite Drehgelenk 12 eine horizontal liegende Drehachse aufweist. Wie aus Fig. 2 zu ersehen ist, liegt das zweite Drehgelenk 12 oberhalb des ersten Drehgelenkes 2. Das die beiden Drehgelenke 2 und 12 verbindende Rohrstück ist, wie aus Fig. 3 zu ersehen ist, bogenförmig ausgebildet.

Mit dem zweiten Drehgelenk 12 ist ein drittes Drehgelenk 13 über ein zunächst S-förmig gekrümmtes und dann gerade verlaufendes Rohrstück verbunden. Diese Form des Rohrstückes 5 ist gewählt worden, damit in Draufsicht gesehen die Drehgelenke 2, 12 und 13 in einer Ebene liegend angeordnet sind. An das Drehgelenk 13 ist ein halbkreisförmiges Rohrstück 7 angeschlossen, an dem ein Drehgelenk 14 befestigt ist, dessen Drehachse senkrecht zur Drehachse des Drehgelenkes 13 liegt. An dieses Drehgelenk 14 schließt sich ein weiteres kreisbogenförmiges Rohrstück 8 an, das mit einem Drehgelenk 15 verbunden ist, dessen Drehachse in einer Ebene liegt, die parallel zur Drehachse des Drehgelenks 13 liegt. An dem Drehgelenk 15 ist dann das bogenförmige Endrohrstück 9 angeschlossen, das die Betankungskupplung 11 trägt. Diese Betankungskupplung ist in bekannter Art und Weise als sogenannte Betankungs-Trockenkupplung ausgebildet, die den Anschluß der unter Druck stehenden Rohrleitung 10 an einen entsprechend ausgebildeten Betankungsadapter gestattet.

An den beiden Rohrstücken 4 und 5 ist eine Balanceeinheit 16 befestigt, die aus einer Zugstrebe 17 und einem Federpaket 18 besteht. Die Vorspannung des Federpaketes 18 ist über eine Einstellvorrichtung 19 einstellbar, so daß die Vorspannung des Federpaketes 18 so gewählt werden kann, daß hierdurch das Gewicht der Rohrstücke 5, 7-9, der Betankungskupplung 41 sowie der Drehgelenke 13-15 aufgenommen wird. Durch diesen Gewichtsausgleich ist es für einen einzigen Mann ohne Mühe möglich, die Betankungskupplung an das entsprechende Tankventil anzuschließen.

Das Kopfstück 1 ist mit seinem ersten Drehgelenk an ein Betankungssystem 3 anschließbar, das z. B. fahrbar ausgebildet sein kann, wie dies anhand des Rades 20 angedeutet ist. Die Vorteile eines erfindungsgemäß ausgebildeten Kopfstückes für ein Betankungssystem bestehen darin, daß dieses aus Edelstahl ausgebildet sein kann, was zum einen eine hohe Eigenstabilität bedeutet und zum anderen dieses resistent gegenüber äußeren und inneren Einflüssen macht. Da das System aus Rohrstücken aufgebaut ist, ist es gleichermaßen gut für die Be- wie auch zur Enttankung einzusetzen. Durch die fünf Drehgelenke ist die Anschlußfläche des Betankungsventils in jeder beliebigen Richtung im Raum auszurichten.

Vor allem ist es jedoch möglich, das Kopfstück mit Rohrstücken auszubilden, die der erforderlichen Betankungsleistung angepaßt sind, so daß die Betankungszeit auf einen Bruchteil der Zeit herabsetzbar ist, die bisher mit den üblichen Betankungssystemen erforderlich waren. Insbesondere bei der Verwendung einer Balanceeinheit ist eine mühelose Einmann-Bedienung gewährleistet. Ein weiterer Vorteil des erfindungsgemäß ausgebildeten Kopfstückes besteht darin, daß dieses auf engstem Raum zusammengeklappt werden kann, so daß es raumsparend abgestellt werden kann. Insbesondere ist die Betankungssicherheit wesentlich erhöht.

**Patentansprüche**

1. Kopfstück (1) für bewegliche oder ortsfeste Betankungssysteme, insbesondere für die Flugzeugdruckbetankung, mit einer Betankungskupplung (11) für den Anschluß an den zu füllenden bzw. zu entleerenden Tank, dadurch gekennzeichnet, daß das Kopfstück (1) aus einer aus fünf Rohrstücken (4, 5, 7-9) gebildeten Rohrleitung (10) besteht, die jeweils durch Drehgelenke (12-15) mit jeweils einem Freiheitsgrad miteinander verbunden sind, daß an dem der Betankungskupplung (11) gegenüberliegenden Ende der Rohrleitung ein weiteres erstes Drehgelenk (2) für den Anschluß an das Betankungssystem (3) angeordnet ist, daß von den fünf Drehgelenken (2, 12-15) das erste Drehgelenk (2), das dritte Drehgelenk (13) und das fünfte Drehgelenk (15) mit zueinander parallelen Drehachsen angeordnet sind, daß die Drehachsen des zweiten Drehgelenks (12) und des vierten Drehgelenks (14) senkrecht zu den Drehachsen der Drehgelenke (2, 12, 15) liegend angeordnet sind, und daß das dem ersten Drehgelenk (2) nachgeschaltete erste Rohrstück (4) mit dem diesem nachgeschalteten und durch das zweite Drehgelenk (12) verbundene zweite Rohrstück (5) über eine Balanceeinrichtung (16) verbunden ist, die einerseits ein freies Verschwenken des ersten (4) und zweiten Rohrstückes (5) gegeneinander gestattet, andererseits das Gewicht des zweiten (5) und der nachgeschalteten Rohrstücke (7-9) aufnimmt.

2. Kopfstück nach Anspruch 1, dadurch gekennzeichnet, daß die Drehachsen aufeinanderfolgender Drehgelenke senkrecht zueinander liegen.

3. Kopfstück nach Anspruch 1 oder 2, dadurch gekennzeichnet, daß das am Rohrleitungsende angeordnete erste Drehgelenk (2) mit einer lotrecht liegenden Drehachse angeordnet ist.

4. Kopfstück nach Anspruch 1, dadurch gekennzeichnet, daß die Balanceeinrichtung (16) aus einer Zugstrebe (17) und einem Federpaket (19) besteht, das das erste mit dem zweiten Rohrstück (4, 5) verbindet.

5. Kopfstück nach Anspruch 4, dadurch gekennzeichnet, daß die Vorspannung des Federpaketes (19) einstellbar ist.

6. Kopfstück nach einem der Ansprüche 1 bis 5, dadurch gekennzeichnet, daß das erste Drehgelenk (2) und das diesem nachgeschaltete zweite Drehgelenk (12) übereinanderliegend angeordnet sind.

7. Kopfstück nach Anspruch 5, dadurch gekennzeichnet, daß die Drehachse des am zweiten Drehgelenk (12) nachgeschalteten dritten Drehgelenks (13) in der gleichen Ebene wie die des ersten Drehgelenks (2) liegt und daß das zweite und dritte Drehgelenk (12, 13) in einer Ebene liegend angeordnet sind.

**Claims**

1. A headpiece (1) for movable or stationary fuelling systems, in particular for the pressure-fuelling of aircraft, having a fuelling coupling (11) for attachment to the tank to be filled or emptied, characterised in that the headpiece (1) consists of a pipeline (10) formed from five pieces of pipe (4, 5, 7-9) which are joined together in each case by swivel joints (12-15) with a degree of freedom in each case ; in that at the end of the pipeline opposite to the fuelling coupling (11) a further first swivel joint (2) is arranged for attachment to the fuelling system (3) ; in that, of the five swivel joints (2, 12-15), the first swivel joint (2), the third swivel joint (13) and the fifth swivel joint (15) are arranged with rotational axes parallel to each other ; in that the rotational axes of the second swivel joint (12) and of the fourth swivel joint (14) are arranged lying perpendicular to the rotational axes of the swivel joints (2, 12, 15) ; and in that the first piece of pipe (4), connected after the first swivel joint (2), is joined to the second piece of pipe (5) (connected after the first piece and joined by the second swivel joint (12)) via a balance device (16) which on the one hand enables the first piece of pipe (4) and the second (5) to pivot freely relative to each other and on the other hand takes up the weight of the second piece of pipe (5) and the subsequently connected pieces (7-9).

2. A headpiece according to Claim 1, characterised in that the rotational axes of consecutive swivel joints are perpendicular to each other.

3. A headpiece according to Claim 1 or 2, characterised in that the first swivel joint (2) arranged at the end of the pipeline is arranged with a vertical rotational axis.

4. A headpiece according to Claim 1, characterised in that the balance device (16) consists of a draw strut (17) and a pack of springs (19) which joins the first piece of pipe with the second (4, 5).

5. A headpiece according to Claim 4, characterised in that the pre-tension of the pack of springs (19) is adjustable.

6. A headpiece according to any one of Claims 1 to 5, characterised in that the first swivel joint (2) and the second swivel joint (12) connected after it are arranged one above the other.

7. A headpiece according to Claim 5, characterised in that the rotational axis of the third swivel joint (13) connected subsequently to the second swivel joint (12) lies in the same plane as that of the first swivel joint (2), and in that the second and third swivel joint (12, 13) are arranged lying in one plane.

**Revendications**

1. Tête pour systèmes de ravitaillement mobiles ou à poste fixe, en particulier pour le ravitaillement sous pression des avions, avec un raccord de ravitaillement (11) pour la connexion au réservoir à remplir ou à vider, caractérisée en ce que la tête (1) se compose d'une conduite tubulaire (10) constituée de 5 pièces tubulaires (4, 5, 7 à 9), qui sont respectivement reliées par des articulations cylindriques (12, à 15) chacune avec un degré de liberté, en ce qu'une autre première articulation cylindrique (2) est à l'extrémité de la conduite tubulaire opposées au raccord (11) de ravitaillement en vue de la connexion au système (3) de ravitaillement, en ce que parmi les cinq articulations cylindriques (2, 12 à 15), la première (2), la troisième (13) et la cinquième (15) ont des axes de rotation parallèles les uns aux autres, en ce que les axes de rotation de la deuxième (12) et de la quatrième (14) articulation cylindrique sont disposés perpendiculairement aux axes de rotation des articulations cylindriques (2, 12, 15), et en ce que la première pièce tubulaire (4), qui suit la première articulation cylindrique (2) est reliée à la deuxième pièce cylindrique (5), qui la suit, et lui est reliée par la deuxième articulation cylindrique (12), par un équilibrage (16) qui, d'une part permet un libre pivotement des première (4) et seconde (5) pièces tubulaires et, d'autre part compense le poids de la deuxième (5) pièce tubulaire et des pièces tubulaires suivantes (7 à 9) placées en aval.

2. Tête cylindrique selon la revendication 1, caractérisée en ce que les axes de rotation des articulations cylindriques successives sont disposées perpendiculairement les uns aux autres.

3. Tête cylindrique selon la revendication 1 ou 2, caractérisée en ce que la première articulation cylindrique (2), située à l'extrémité de la tubulure cylindrique, comporte un axe de rotation vertical.

4. Tête cylindrique selon la revendication 1, caractérisée en ce que le dispositif (16) d'équilibrage se compose d'un tirant (17) et d'un bloc ressort (19) qui relient la première pièce tubulaire avec la seconde (4, 5).

5. Tête selon la revendication 4, caractérisée en ce que la précontrainte du bloc ressort (19) est réglable.

6. Tête selon l'une des revendications 1 à 5, caractérisée en ce que la première articulation cylindrique (2) et la deuxième articulation cylindrique (12) qui lui est connectée sont disposées l'une au-dessus de l'autre.

7. Tête selon la revendication 5, caractérisée en ce que l'axe de rotation de la troisième articulation cylindrique (13) connectée en aval de la deuxième articulation cylindrique (12) se trouve dans le même plan que la première articulation cylindrique (2), et que la deuxième et la troisième articulation cylindrique (12 et 13) sont disposées dans le même plan.

Fig. 1

Fig.2

Fig. 3